# EUROPEAN PATENT SPECIFICATION

(11) **EP 3 346 379 B1**
(45) Date of publication and mention of the grant of the patent: **04.03.2020**
(21) Application number: 17150728.8
(22) Date of filing: 09.01.2017
(51) Int. Cl.: G06F 9/50, G06F 16/00, G06F 16/25

(54) **DATABASE MANAGEMENT SYSTEM WITH DYNAMIC ALLOCATION OF DATABASE REQUESTS**
DATENBANKVERWALTUNGSSYSTEM MIT DYNAMISCHER ZUWEISUNG VON DATENBANKANFORDERUNGEN
SYSTÈME DE GESTION DE BASE DE DONNÉES AVEC ATTRIBUTION DYNAMIQUE DES REQUÊTES DE BASE DE DONNÉES

(43) Date of publication of application: 11.07.2018
(73) Proprietor: SAP SE, 69190 Walldorf (DE)
(72) Inventor: SUNDARAM, P. Meenakshi, 69190 Walldorf (DE)
(74) Representative: Richardt Patentanwälte PartG mbB

(56) References cited:
- US-A1- 2014 089 282
- US-A1- 2015 149 514
- US-B1- 8 972 465
- XU XIWEI ET AL: "The Blockchain as a Software Connector", 2016 13TH WORKING IEEE/IFIP CONFERENCE ON SOFTWARE ARCHITECTURE (WICSA), IEEE, 5 April 2016 (2016-04-05), pages 182-191, XP032927547, DOI: 10.1109/WICSA.2016.21 [retrieved on 2016-07-19]

## Description

### Field of the invention

The invention relates to database management systems.

### Background and related art

Database management system is a computer system that may be used to interact with a user or other applications to provide access to one or more database systems. Database management systems often provide a means for enabling different types of clients applications and databases to work together cooperatively.

United States patent application publication US 2014/0089282 A1 discloses a system selectively dequeues journal requests instead of dequeuing on a first come, first served basis. A database system detects that a request for access from a client is a journal batch, which includes multiple journal requests. The system queues the journal batch in a queue with other journal batches for processing. The system selectively dequeues journal requests from the journal batch queue, including selecting at least one journal request from multiple different journal batches.

Unites States patent publication US 8,972,465 B1 discloses a burst buffer appliance adapted for coupling between a computer system and a file system. The burst buffer appliance comprises a flash memory or other high-speed memory having a substantially lower access time than the file system, and an analytics engine, and is configured to aggregate multiple data files having a size below a designated threshold into a container having at least one associated metadata file for processing by the analytics engine. The burst buffer appliance directs storage of the container in the file system. The analytics engine is configured to generate at least a content-based portion of the one or more metadata files of the container based at least in part on content of one or more of the multiple data files so as to permit one or more subsequent processing operations to be performed using the metadata file(s) rather than the corresponding multiple data files.

### Summary

The invention provides for a database management system, a computer program product, and a method in the independent claims. Embodiments are given in the dependent claims.

In one aspect the invention provides for a database management system comprising a container management system. A container management system is a memory management system for sorting and grouping database requests into containers or blocks of memory. The container management system comprises a container management system memory for storing machine-executable instructions. The container management system further comprises a container management system processor. References to a processor herein are understood to also refer possibly to multiple cores and/or processors. The processors may be present within a single machine or may be distributed within a group or cluster of machines that operate cooperatively.

Execution of the machine-executable instructions cause the container management system processor to repeatedly receive multiple database requests via a first network connection. Each of the multiple database requests comprises meta data descriptive of the database requests. The meta data could for example be descriptive of the type of request, the type of databases or data which are requested to be operated on or request data from, or may even contain information about the subject matter of the individual database requests. Execution of the machine-executable instructions further causes the container management system processor to repeatedly calculate a receiving rate by counting the multiple data requests received in a predetermined duration. The predetermined duration may for example be used to measure the number of database requests received in a particular time interval. In some examples the predetermined duration may be blocks of time which are looked at discreetly. In other examples the receiving rate could be a moving average that is calculated on a continual basis preceding a particular time.

Execution of the machine-executable instructions further cause the container management system processor to repeatedly calculate a processor count using a predictive model and the receiving rate. The processor count as used herein is an estimate of the number of processors needed to process the number of multiple database requests. In some examples the receiving rate could be a value which is used to look up a processor count in a lookup table. In other examples the predictive model may be more complicated. For example the predictive model may take the receiving rate at a variety of time intervals and use this to better predict the necessary processor count. For example the receiving rate could briefly spike up and then lower again. The predictive model could be a mathematical function which is used to approximate a curve or the predictive model could also be more complicated such as a neural network. In some simpler examples the predictive model could be a look up table that could possibly be determined empirically.

Execution of the machine-executable instructions further causes the container management system processor to determine a number of data containers using the rate of requests and a container memory model. Each of the data containers is a block of the container management system memory assigned by continuous address space. The data containers as used herein are these blocks of memory which are used to store the multiple database requests as they are received. In some instances the container memory model may be fairly simple and may be just directly scaled by the rate of requests. In other examples the container memory model may be more sophisticated in that it may take into account the type of meta data that has been received with the multiple database requests. For example the data containers could be used to sort the type or destination of various database requests.

Execution of the machine-executable instructions further causes the container management system processor to repeatedly request a processor pool from a processor hosting service via a second network connection to satisfy the processor count. The processor hosting service is a system which manages or provides access to computing resources. These computing resources may for example, may be either real or virtual machines which are then provided or configured to process the multiple database requests. The elements within a processor pool may in some instances be processors within a single machine or virtual machine. In other examples the processor pool may be multiple machines or virtual machines which are provided. Execution of the machine-executable instructions further causes the container management system processor to repeatedly allocate the number of data containers in a container management system memory.

Execution of the machine-executable instructions further causes the container management system processor to repeatedly transfer the multiple database requests to the data containers as they are received. Each of the multiple database requests is assigned to a chosen data container selected from the data containers using the meta data. In this step the multiple database requests are effectively sorted into the different data containers based on the meta data that they have. Depending upon the rate at which the multiple database requests are received the sorting may in some examples be performed differently. For example if the number of multiple database requests is extremely low the system could simply allocate one or very few data containers. In this instance variable sorting may be taking place. As the number of the multiple data requests increases the multiple database requests can be more effectively sorted. For example they can be sorted by the destination database for which the database request is intended. The subject matter may also be used to sort the multiple database requests.

The above steps which are described as being performed repeatedly therefore define a dynamic process that is able to adapt to a changing in the receiving rate of the multiple database requests. As the receiving rate rises and falls more data containers can be allocated or not replaced as they are filled and transferred to the processor hosting service. Additionally the container management system may also adjust the processor pool provided by the hosting service dynamically by repeatedly sending updated requests to the hosting service.

Execution of the machine-executable instructions further cause the container management system to repeatedly transfer a filled data container selected from the number of data containers to the processor hosting service via the second network connection. The filled data container is filled with the multiple data requests above a predetermined threshold. As the data containers are filled they are then transferred to the processor hosting service for processing by the processor pool. This may result in more efficient computational processing of the multiple database requests. The sorting operation enables the multiple database requests to be grouped so that they can be more effectively processed by individual processors in the processor pool.

In another embodiment the database management system further comprises the hosting service. The processor hosting service comprises multiple processor groups. The processor pool comprises the multiple processor groups. Each of the multiple processor groups comprises multiple processors and a shared memory. That is to say each of the multiple processor groups has multiple processors and they are all able to operate on a shared memory. This enables the processors to work cooperatively on a filled data container. The processor hosting service is configured for allocating a portion of the multiple processor groups to the container management system. This provides the processor pool.

In another embodiment the container memory model is configured for formatting the multiple data requests into a page of memory for the shared memory for use by the processor group. Transferring the multiple data requests to the data containers as they are received comprises formatting the multiple data requests into the page of memory using the container memory model. This embodiment may be advantageous because it saves on the amount of work to group related database requests and have them processed together. As the multiple database requests are received they are stored together but they are also at the same time put into the proper format for use by the processor group. The multiple data requests are placed into the proper format so that they need only be transferred via the network connection and then directly transferred into the operating memory which can be used directly by the processor group. This results in a huge computational gain in processing large numbers of multiple database requests. The pre-sorting of the multiple database requests and placing them into the proper memory format enables an acceleration of the processing.

In another embodiment the multiple processors are configured for generating database transaction requests using the multiple database requests. The multiple processors route the database transaction requests to two or more databases using a third network connection.

The multiple processors are configured for receiving a confirmation or failure of each of the database transaction requests via the third network connection. This is beneficial because the database management system can see or track if the database transaction requests corresponding to a particular database request was successfully completed or not.

In another embodiment the multiple processors are configured for writing the confirmation or failure of each of the database transaction requests periodically in a block chain log. This may be beneficial because it provides a means of logging the confirmation or failure of a large number of database transaction requests in a form which cannot be modified.

In some examples the database transaction request itself is written in the block chain log. In other examples the database transaction request and the identifier for the corresponding database request is also recorded in the block chain log. In yet other examples an identifier of the database request or the database request itself corresponding to the database transaction request is stored instead in the block chain log.

In another embodiment the database management system further comprises an interface system for connecting to multiple clients. The interface system is configured for receiving application requests from the multiple clients via a fourth network connection. The interface system is configured for transforming the application requests into the multiple database requests and the meta data. The interface system comprises a completion log for logging each of the application requests. The interface system is configured for repeatedly searching the block chain log for confirmation or a failure of each of the application requests. The interface system is configured for reporting the confirmation or the failure to the multiple clients upon finding the confirmation or the failure within the block chain log. This embodiment may be beneficial because it may provide for an efficient means of providing confirmation or failure of a database request instead of needing to individually track each of the database requests and its corresponding database transaction request the results can simply be written in the block chain log. Other portions of the database management system can then periodically search for a record confirming or indicating a failure of a particular database transaction request and/or the corresponding database request.

In another aspect the invention provides for a computer program product comprising machine-executable instructions for execution by a processor controlling the container management system of a database management system. Execution of the machine-executable instructions cause the container management system processor to repeatedly receive multiple database requests via a first network connection. Each of the multiple database requests comprises meta data descriptive of the multiple database requests. Execution of the machine-executable instructions further cause the container management system processor to repeatedly calculate a receiving rate by counting the multiple database requests received in a predetermined duration. Execution of the machine-executable instructions further cause the container management system processor to repeatedly calculate a processor count using a predictive model and the receiving rate.

Execution of the machine-executable instructions further cause the container management system processor to repeatedly determine a number of data containers using the rate of requests and a container memory model. Each of the data containers is a block of the container management system memory assigned by continuous address space. Execution of the machine-executable instructions further cause the container management system processor to repeatedly request a processor pool from a processor hosting service via the second network connection to satisfy the processor count. Execution of the machine-executable instructions further cause the container management system processor to allocate the number of the data containers in the container management system memory. Execution of the machine-executable instructions further cause the container management system processor to repeatedly transfer the multiple database requests to the data containers as they are received. Each of the multiple database requests is assigned to a chosen data container selected from the data containers using the meta data. Execution of the machine-executable instructions further cause the container management system processor to repeatedly transfer a filled data container selected from the number of data containers to the processor hosting service via the second network connection. The data container is filled with the multiple data requests above a predetermined threshold.

In another aspect the invention provides for a method of operating a database management system comprising a container management system. The method comprises repeatedly receiving multiple database requests via a first network connection. Each of the multiple database requests comprises meta data descriptive of the multiple database requests. The method further comprises repeatedly calculating a receiving rate by counting the multiple database requests received in a predetermined duration. The method further comprises repeatedly calculating a processor count using a predictive model and the receiving rate. The method further comprises repeatedly determining a number of data containers using the rate of requests and a container memory model. Each of the data containers is a block of the container management system memory assigned by continuous address space. The method further comprises repeatedly requesting a processor pool from a processor hosting service via a second network connection to satisfy the processor count. The method further comprises repeatedly allocating the number of the data containers in the container management system memory. The method further comprises repeatedly transferring the multiple database requests to the data containers as they are received. Each of the multiple database requests is assigned to a chosen data container selected from the data containers using the meta data. The method further comprises repeatedly transferring a filled data container selected from the number of data containers to the processor hosting service via the second network connection. The filled data container is filled with the multiple database requests above a predetermined threshold.

It is understood that one or more of the aforementioned embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magnetooptical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage may be any volatile or non-volatile computer-readable storage medium.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the C programming language or similar programming languages and compiled into machine executable instructions. In some instances the computer executable code may be in the form of a high-level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further understood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

### Brief description of the drawings

In the following embodiments of the invention are explained in greater detail, by way of example only, making reference to the drawings in which:
- Fig. 1: illustrates an example of part of a database management system;
- Fig. 2: shows a flow chart which illustrates a method of using the database management system of Fig. 1;
- Fig. 3: illustrates a further example of a database management system;
- Fig. 4: illustrates a further example of a database management system; and
- Fig. 5: illustrates a portion of a further example of a database management system.

### Detailed Description

Like numbered elements in these figures are either equivalent elements or perform the same function. Elements which have been discussed previously will not necessarily be discussed in later figures if the function is equivalent.

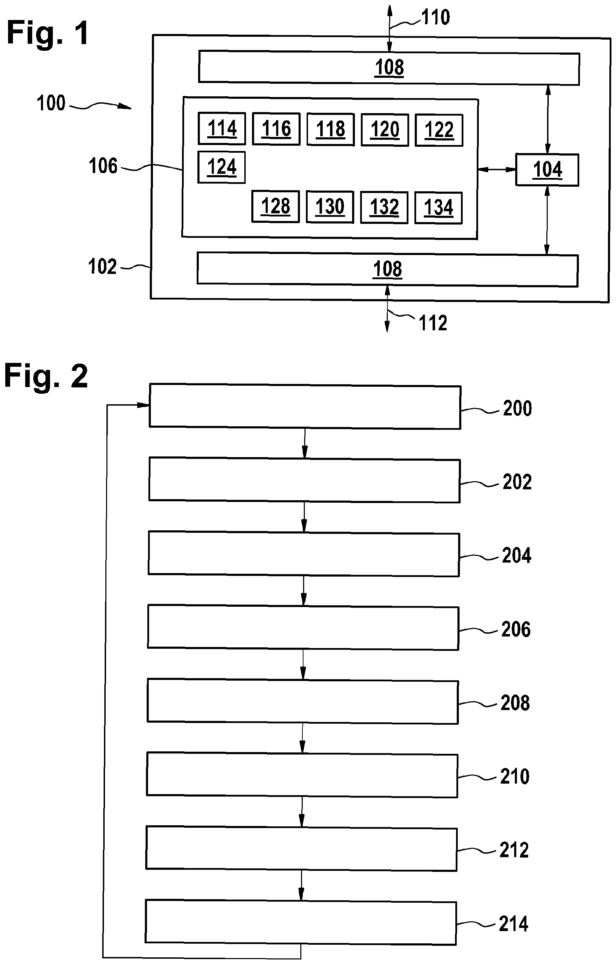

Fig. 1 illustrates an example of a container management system 102 that is part of a database management system 100. The container management system 102 is seen as being implemented as a computer which comprises a container management system processor 104. The container management system processor 104 is connected to a container management system memory 106 and a network adaptor 108. The network adaptor 108 is configured for establishing a first network connection 110 and a second network connection 112.

The container management system memory 106 is shown as containing machine-executable instructions 114 which enable the container management system processor 104 to perform various functions. The container management system memory 106 is further shown as containing multiple database requests 116 that have been received via the first network connection. The multiple database requests 116 have been placed into a standard format and comprise meta data which is descriptive of each individual database request. The container management system memory 106 is further shown as containing a receiving rate 118. The receiving rate is calculated by counting the number of multiple database requests 116 in a predetermined duration. The container management system 106 is further shown as containing a processor count 120 that was determined using a predictive model and the receiving rate 118. The predictive model for example could be implemented by the machine-executable instructions 114.

The container management system memory 106 is further shown as containing a number of data containers 122. The number of data containers 122 is a value which is calculated using the receiving rate 118 and a container memory model. The container memory model may also be implemented by the machine-executable instructions 114.

The container management system memory 106 is further shown as containing a processor pool request 124 that can be sent via the second network connection 112 to a hosting service which is not shown in this Fig. The processor pool request 124 requests processors from the hosting service that will satisfy the processor count 120.

The container management system memory 106 is further shown as containing a number of data containers 128, 130, 132, 134. The data containers are container management system memory 106 which has been allocated and has a continuous address space. The use of the continuous address space makes it easy to copy the entire container 128, 130, 132, 134 and send it out via the second network connection 112 to the hosting service for processing. As the multiple database requests 116 are received they are then transferred and stored in one of the data containers 128, 130, 132, 134. The data container 128, 130, 132, 134 is selected by using the meta data of the individual database request 116.

Fig. 2 shows a flowchart which illustrates a method of operating the database management system 100 illustrated in Fig. 1. First in step 200 the multiple database requests 116 are received via the first network connection 110. Next in step 202 the receiving rate 118 is calculated repeatedly by counting the multiple database requests received in a predetermined duration. Next in step 204 the processor count 120 is calculated using a predictive model and the receiving rate 118. Then in step 206 the number of data containers is determined using the receiving rate and a container memory model. Then in step 208 the processor pool is requested by sending the processor pool request 124 via the second network connection 112. Then in step 214 when one of the containers 128, 130, 132, 134 is filled above a predetermined threshold it is transferred via the second network connection 112 to the hosting service. In Fig. 2 there is an arrow showing that the method proceeds back to step 200. The arrow is intended to represent that each of the steps detailed above may be repeated multiple times. For example the receiving rate may be calculated and monitored continually and the number of data containers may be adjusted accordingly. Also after a data container has been filled the system may look at the receiving rate and determine if the filled data container should be replaced and if it is replaced it should be replaced by additional data containers 128.

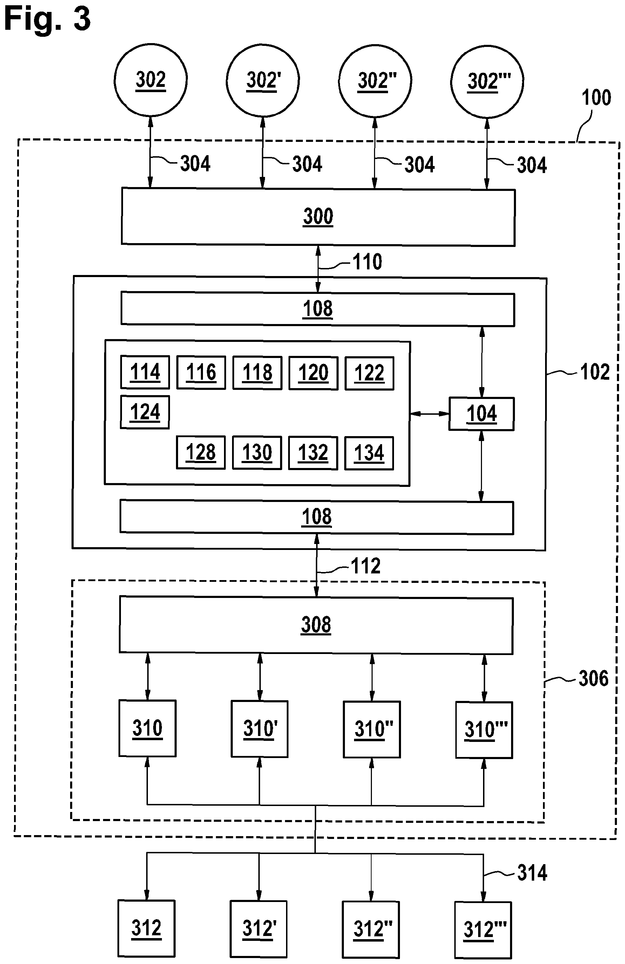

Fig. 3 illustrates another example of a database system 100. In this example the container management system 102 is shown as being connected to an interface system 300 via the first network connection 110. The interface system 300 is configured for connecting to multiple clients 302, 302', 302", 302"' via a fourth network connection 304. The multiple network connections labeled 304 are intended to represent various network configurations. The various third network connections 314 may represent a single network connection or may represent a collection of diverse network connections.

The clients 302, 302', 302", 302'" could for example be machines hosting applications which generate one or more of the multiple database requests 116. These requests are then transferred to the interface system 300 which then places them into a standardized form and generates the meta data. As this proceeds they are then passed via the first network connection 110 to the container management system 102.

The database management system 100 is also shown as containing a processor hosting service 306. The processor hosting service 306 may be external to the database management system 100 but in this example it is shown as being logically connected. The processor hosting service 306 comprises a host manager 308 for managing the operation of the processor hosting service 306 any number of virtual machines 310, 310', 310", 310'". A virtual machine may correspond to a processor group assigned or allocated by the hosting service. When the host manager 308 receives the processor pool request 124 it allocates the appropriate number of virtual machines 310, 310', 310", 310'" to satisfy this processor pool request 124. The virtual machines 310, 310', 310", 310'" may logically contain one or more processors which are organized such that they each have one or more processor groups. Each of the processor groups shares a shared memory. When a container 128, 130, 132, 134 is filled it is passed via the second network connection 112 and then onto one of the virtual machines 310, 310', 310", 310'". Processors within the processor pool then operate on the database requests transforming them into database transaction requests which are individually sent to the appropriate database system 312, 312', 312", 312'" for processing via a third network connection 314. The network connection labeled 314 are intended to represent various network configurations. The various third network connections 314 may represent a single network connection or may represent a collection of diverse network connections.

Real world processes using database systems today typically require integration between various systems both inside and outside an enterprise. The Real world mass payments of companies spans across multiple systems over an on premise and on demand systems in a heterogeneous network. Examples may support mass data payments by executing them in real time.

Blockchain, the shared ledger technology which allows any participant in a network to see the system of record will have a transformative impact on a number of industries. Participants in networks are all maintaining their own traditional ledgers to record transactions between them within their ecosystems. Despite efforts to reduce the complexity and increase the interconnectedness of these systems through investment in integration and B2B technologies, network participants are still typically swapping files of data between them. As a result, the processes to underpin asset ownership and asset transfer in business networks are frequently inefficient, expensive and vulnerable.

Blockchain holds the potential for all participants in a network to share a system of record. This replicated, shared ledger will provide consensus, provenance, immutability and finality around the transfer of assets within business networks - reducing costs, complexity and time, underpinning shared, trusted processes, enabling trusted recordkeeping and improving discoverability.

The context for the use case is focused on saving computational resources which may result in saving time and money for processing database transactions such as international payments. Examples may provide a way to send a real money payment from one system to an international counterpart in near real time.

The below are some challenges for an Organization in doing Real Time Payments.
- Complex Enterprise System Landscape
- No unified Payment Governance process across the Enterprise
- Complex bookkeeping
- Lack on Efficiency in regulatory compliance
- Many Point to Point Communication
- Complex System Landscape with many Payment Interfaces
- Lack of Flexibility & Scalability
- Higher TCO and High Risk
- Unnecessary Data Replication, Data uploads
- No Unified Payment Reporting
- Higher Data Load across the entire system landscape
- Lack of User Simplicity

Examples may provide a way to avoid payment delays in the Enterprise landscape and maintain the needed Data Security & Data Integrity for doing Real time payments using Block chain.

In one example, the high-level architecture is described. The User requests are received via different Interactive channel like System, Mobile, ATM, Watch, Devices, POS Terminal...etc., The User Credentials are verified by Application Router(based on Auth Tokens) and Requests are forwarded to Abstraction Layer. If the verification is successful means further steps will be processed. The User Requests are tagged with a specific Session ID & a Token ID.

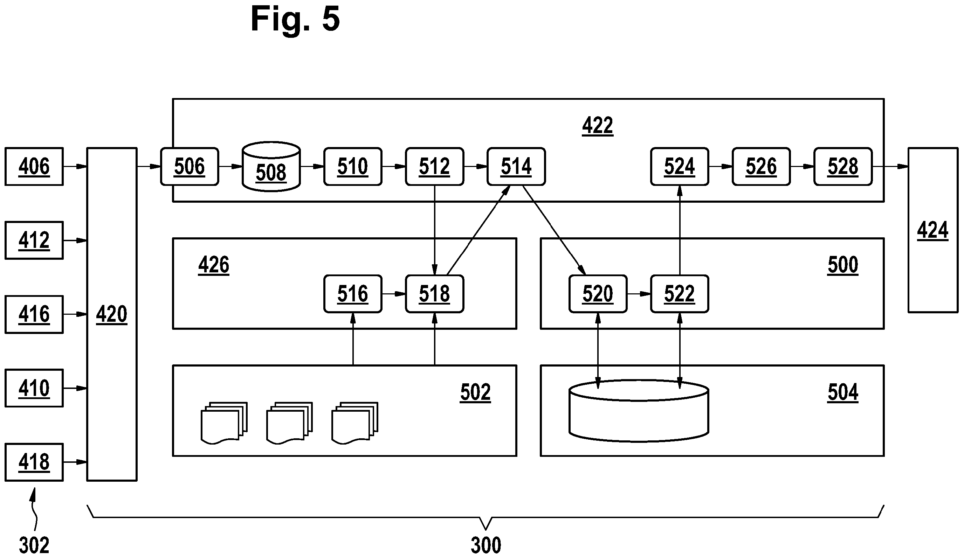

The Data Processing Engine in the Abstraction Layer gets the Data and does some Standardization, enrichment & Validation (based on Rules), after that it cleanses the data and checks for any matching/duplicates in the dataset and it merges the identified records and load the same to the Asynchronous Queue (as described below in Fig. 5).

The Abstraction Layer converts the request to JSON Format and sends to Asynchronous queue for further processing. The Asynchronous queue has different transactions from different interactive channels for further processing. The transactions are coming to the Asynchronous queue after relevant Approvals (Automated or Manual based on some predefined Rules). When the Transactions are approved means it is locked for further changes. Each Transaction from the queue is validated & verified sequentially by Rule Engine for any Anomalies and allowed for further processing in the pipeline (Ex. Limit checking ...). The priority of the transaction is changed based on the Predefined Rules (like Interactive channel source, User Profile, Created System etc...).

The transactions are passed to the Matching Engine which checks for any matching with the List of Blocked Accounts with the given set of Evaluation criteria. The Classifier gives a priority rating for each transaction based on some predefined conditions and packages the different transactions into different Buckets/ Clusters. The different Buckets/ Clusters are given to the container management component. The container management component runs multiple parallel transaction Buckets/Clusters in different containers in a secured manner.

Based on the number of Clusters the Container Management layer creates the number of needed containers for Parallel Processing of the different Clusters in a concurrent manner. The Container Management identifies the needed Memory, Processing Units, and parallel Threads etc. in runtime and creates the needed runtime dynamically for Parallel execution. This provides the needed adaptiveness, avoids sticky sessions, Elasticity, Scalability, efficient Resource utilization and the needed Performance.

The container management layer handover the transaction Buckets to Payment Engine. The Payment Engine sorts out different Transaction Buckets to different types of payment methods and sends the details to the Messaging Layer (in packets).

The Payment Engine helps to centralize the decision making for payments in the architecture. It decides how to send payments to different payment networks, payment platforms etc., this help to centralize these rules and allows for a scalable Routing method.
- Holding the rules for payment flows and routing (payment orders)
- Converting internal payment formats to the agreed upon format
- Sending payment messages to the different Connected environment
- Providing payments APIs and services to other participants in the system landscape.

The Messaging Layer adds the details of the IP Address and Port details (Dynamic Tunnelling) to every Transaction packet and sends the details to the Connectivity Layer. With the connection Details, the Infrastructure technical connectivity is dynamically established using the Technical users and with the needed Authorization rights which is created dynamically based on the transaction context (based on the network to be connected). The Connectivity Layer connects to the different Payment Networks, Payment Platforms & Payments Gateways (using Block chain) based on the Connectivity details in the Message Header of the Transaction Packet/bucket.

When the Connectivity is successfully established and Payment Details are Successfully Transferred, the Payments are processed by the corresponding Payment System. When the Payment processing is Successful, the information is transferred to the Backend System. The Request is passed to the user which invalidates the Current User session and the Transaction session context is closed leaving the remote and main databases in a mutually consistent state (if the databases are different) and the connection with the different remote systems are closed & released. Finally the Successful Logout confirmation is given to User. The User session is invalidated with inactivity also within the configured Threshold time.

All the above framework components are running inside in a Database for faster processing.

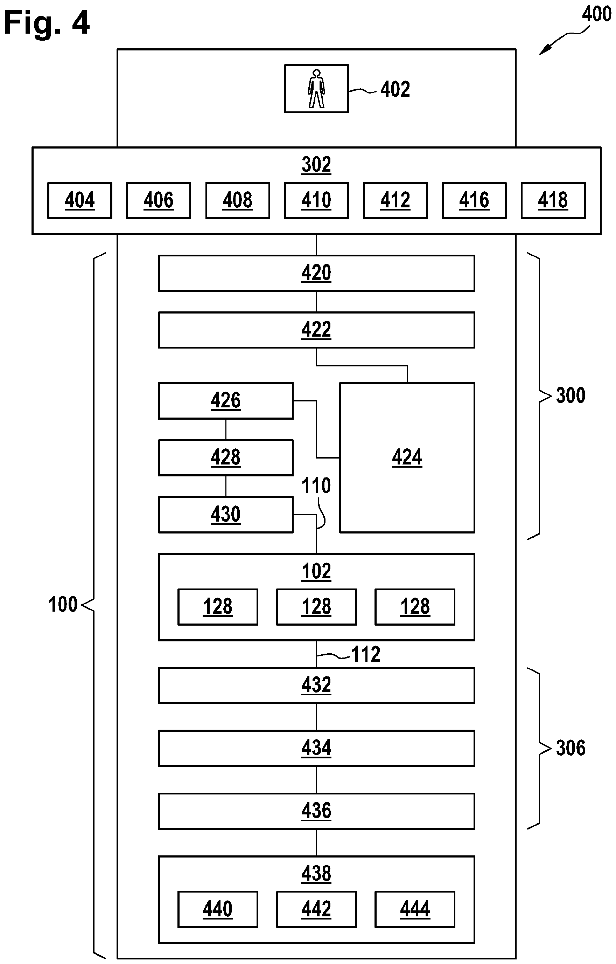

Fig. 4 shows a practical implementation of the above described system by adapting the database management system 100 of Fig. 3. The database management system 400 show in Fig. 4 does not show individual machine components but shows the construction of the system in logical and functional terms. In the Fig. an end user 402 can use any number of clients 302, 302', 302", 302"' to initiate a payment. The examples of payments shown are Alexa Voice 404, a UI application 406, a smart watch application 408, a POS terminal 410, a mobile device 412, an ATM 416, and also other sources 418. The interface system 300 is shown as comprising logically an application router 420, an abstraction layer 422, an asynchronous queue 424, a rule engine 426, a matching engine 428, and a classifier 430. The first network connection 110 is shown as connecting the classifier 430 to the container management system 102. The second network connection 112 shows the connection between the container management system 102 and a payment engine 432 of the processor hosting service 306. Functionality implemented by the processor hosting service 306 is shown to be a payment engine 432, a messaging layer 434, and an infrastructure connectivity layer 436.

This example is also further shown as containing a block chain network 438 which has a payment network 440, record of payments for a bank 442, and various payment platform records 444. The block chain network 438 may be used to store the success or failure of the various payments. The abstraction layer 422 may for example contain a record or log on a particular database request until it is seen as being published in the block chain network 438. Information published in the block chain network 434 may then be used to report back to the clients 302, 302', 302", 302'" on the success or failure of a particular payment.

Although the features of Fig. 4 are shown in the context of a payment system they are however generally applicable to database systems in general.

The use of the blockchain functionality depicted in Fig. 4 may have one or more of the following advantages:
- Improved bookkeeping
- Consolidated audit trail
- Faster clearing and settlement
- Ledger consolidation
- Operational improvements
- More efficient regulatory compliance and provide Full transparency
- Leverage common Technical infrastructure
- Reducing Point to Point Communication
- Reducing Data Replication Time
- Reduce system landscape Complexity and Easier to maintain
- Maximize End User Adoption with unified Payment Governance Process
- Substantial System Landscape Simplification by eliminating Interfaces
- Higher Flexibility & Scalability
- Lower TCO and Low Risk
- Avoiding unnecessary Data Replication, Data uploads
- Unified Payment Reporting
- Reduced Data Load across the entire system landscape
- User Simplicity
- Speed time-to-insight and action by allowing business users to directly access, manage, and visually interact with Payment Processing data.
- Single source of Truth
- Real time Business process Integration
- Data Integrity and Interoperability
- Process Optimization
- Fast and efficient: Scale up or down in minutes, elastic capacity provisioning
- Adaptiveness, efficient Resource utilization and Improved Performance.

The Abstraction layer has the Data Processing Engine Component where the Data is staged temporarily, validated, cleansed, matched and loaded in the Asynchronous Queue. The validation is done based on different Rules maintained in the system for Data Processing. The Matching is done to identify the transactions which can be combined together as a single transaction for further processing based on the details in the transaction (based on common set of matching field values). Creating a technical user for every application user in runtime and assigning the access rights to different application areas by the Application Router using the JSON token. The DB access rights for the Technical user is assigned based on the application user rights dynamically so that the tech user has the necessary privileges to access and execute the DB Queries. The session ID of the Application user is passed to the tech user to make sure to bind the Application user context to the tech user context.

The Application User id is passed (along with other parameters) when the tech user is querying the DB so that the specific results relevant to that user are retrieved from the database. This helps to avoid the tight coupling of the User session with the Backend system.

Fig. 5 shows a chart which shows an implementation of the interface system 300 in logical terms. In this example the interface system 300 is shown as containing an application router again 420 which is connected to multiple clients 302, 302', 302", 302"'. The application router 420 is connected to an abstraction layer 422. The abstraction layer can communicate with an asynchronous queue 424 and a rule management 426 and data cleaning 500 module. The system is further shown as containing a rule database 502 and also a collection of reference data and cleaning repositories 504.

The abstraction layer 422 is shown as receiving data from the application router 420 via a data interface 506. The data interface then buffers data in a staging 508 buffer. The abstraction layer 422 then removes and abstracts data 510. This is then passed onto a completion and enrichment module 512. The completion and enrichment module 512 passes data onto a validation module 514 and also a rule module 518 of the rule management system 426. The rules are provided by a workflow 516 and also the rule database 502. The rules 518 are provided to the validation module 514. The validation module 514 receives data from the completion and enrichment module 512 and the rule module 518. The validation module 514 then passes data to the data cleansing portion 500. This is passed to a data cleansing module 520. The data cleansing module receives data from the reference data and cleansing repositories 504. It then passes data to the matching module 522. The matching module then passes the data back to the abstraction layer 422 to a survivorship and merge layer 524. The survivorship and merge layer 524 then passes the data onto an evaluation and augmentation module 526. The evaluation and augmentation module 526 then passes the data off to a load 528, which then passes the data onto the asynchronous queue 424.

The container Management layer gets the number of Clusters to be executed in parallel. Based on the number of Clusters the Container Management layer creates the number of needed containers for Parallel Processing of the different Clusters in a concurrent manner. Each cluster is getting processed in a separate container in a secured manner based on the different processing option in the data.

The Container Management identifies the needed Memory, Processing Units, and parallel Threads etc. in runtime and creates the needed runtime dynamically for Parallel execution. This provides the needed adaptiveness, avoids tight coupling of user sessions with the backend systems, Elasticity, Scalability, efficient Resource utilization and the needed Performance. If the execution of a cluster in a container is completed means the resources are automatically freed up and it is allocated to the needed container for faster processing.

The container management layer handover the transaction Buckets to Payment Engine. The Payment Engine sorts out different Transaction Buckets to different types of payment methods and sends the details to the Messaging Layer (in packets).

The User Login's to the Application from different interactive channels like System, Mobile, ATM, Watch..., etc. The User Credentials are verified by Application Router and Requests are forwarded to Abstraction Layer. If the verification is successful means further steps will be processed and if the verification is failure means the user will be notified. The Abstraction Layer converts the request to JSON Format and sends to Asynchronous queue for further processing.

The Abstraction layer has the Data Processing Engine Component where the Data is staged temporarily, validated, cleansed, matched and loaded in the Asynchronous Queue. The validation is done based on different Rules maintained in the system for Data Processing. The Matching is done to identify the transactions which can be combined together as a single transaction for further processing based on the details in the transaction (based on common set of matching field values).

Asynchronous Queue has the Transactions List from different channels (After Approval of Transactions).Each Transaction is validated & verified by Rule Engine for any Anomalies and allowed for further processing in the pipeline (Ex. Limit checking ...).The Matching Engine checks for any matching with the List of Blocked Accounts with the given set of Evaluation criteria. The Classifier gives a priority rating for each transaction based on some predefined conditions.

The container management component runs multiple parallel transactions in different containers in a secured manner. The container management layer handover the transactions to Payment Engine. The Payment Engine sorts out different Transaction Types to different types of payment methods and sends the details to the Messaging Layer (in packets).The Messaging Layer adds the details of the IP Address and Port details (Dynamic Tunneling) to every Transaction packet and sends the details to the Connectivity Layer.

The Connectivity Layer connects to the different Payment Networks, Payment Platforms & Payments Gateways (using Block chain) based on the Connectivity details in the Message Header of the Transaction Packet. When the Connectivity is successfully established and Payment Details are Successfully Transferred the Payments are processed by the corresponding Payment System. When the Payment processing is Successful the information is transferred to the Backend System. The Request is passed to the user which invalidates the Current User session and the Transaction session context is closed leaving the remote and main databases in a mutually consistent state (if the databases are different) and the connection with the different remote systems are closed & released. Finally the Successful Logout confirmation is given to User. The User session is invalidated with inactivity also within the configured Threshold time.

The database management system implemented as a Payment Integration platform may offer one or more of the following benefits:
- Message Queuing & Data Tracking
- Error Handling & Resend Capabilities
- Central Logging
- Authorization Management
- Central Rules Management
- Automation of Enrichment & Augmentation
- Automation of Validation & Matching
- Workflow Management for payment approval processes
- Reporting & Analysis Capabilities

### List of reference numerals

- 100: database management system
- 102: container management system
- 104: container management system processor
- 106: container management system memory
- 108: network adaptor
- 110: first network connection
- 112: second network connection
- 114: machine executable instructions
- 116: multiple database requests
- 118: receiving rate
- 120: processor count
- 122: number of data containers
- 124: processor pool request
- 128: data container
- 130: data container
- 132: data container
- 134: data container
- 200: receive multiple database requests via a first network connection, wherein each of the multiple database requests comprises metadata descriptive of the multiple database requests
- 202: calculate a receiving rate by counting the multiple database requests received in a predetermined duration
- 204: calculate a processor count using a predictive model and the receiving rate
- 206: determine a number of data containers using the receiving rate and a container memory model
- 208: request a processor pool from a processor hosting service via a second network connection to satisfy the processor count
- 210: allocate the number of the data containers in the container management system memory
- 212: transfer the multiple data base requests to the data containers as they are received
- 214: transfer a filled data container selected from the number of data containers to the processor hosting service via the second network connection
- 300: interface system
- 302: client
- 302': client
- 302": client
- 302'": client
- 304: fourth network connection
- 306: processor hosting service
- 308: host manager
- 310: virtual machine
- 310': virtual machine
- 310": virtual machine
- 310'": virtual machine
- 312: database system
- 312': database system
- 312": database system
- 312'": database system
- 314: third network connection
- 400: payment system
- 402: end user
- 404: Alexa voice
- 406: UI Application
- 408: watch apps
- 410: POS terminal
- 412: mobile device
- 416: ATMs
- 418: Other Sources
- 420: Application router
- 422: Abstraction Layer
- 424: Asynchronous Queue
- 426: Rule Engine
- 428: Matching Engine
- 430: Classifier
- 432: Payment Engine
- 434: Messaging Layer
- 436: Infrastructure Connectivity Layer
- 438: Block chain network
- 440: Payment Network
- 442: Payments for Bank
- 444: Payment Platforms
- 500: data cleaning
- 502: rule database
- 504: reference data / cleaning repositories
- 506: Data Interface
- 508: Staging
- 510: Extract
- 512: Completion /Enrichment
- 514: Validation
- 516: Workflow
- 518: Rules
- 520: Data Cleansing
- 522: Matching
- 524: Survivorship / Merge
- 526: Evaluation / Augment
- 528: Load

## Claims

1. A database management system (100, 400) comprising a container management system (102), wherein the container management system comprises:
- a container management system memory (106) for storing machine executable instructions (114);
- a container management system processor (104), wherein execution of the machine executable instructions cause the container management system processor to repeatedly:
- receive (200) multiple database requests (116) via a first network connection (110), wherein each of the multiple database requests comprises metadata descriptive of the multiple database requests;
- calculate (202) a receiving rate (118) by counting the multiple database requests received in a predetermined duration;
- calculate (204) a processor count (120) using a predictive model and the receiving rate;
- determine (206) a number of data containers (122) using the receiving rate and a container memory model, wherein each of the data containers is a block of the container management system memory assigned by continuous address space;
- request (208) a processor pool from a processor hosting service (306) via a second network connection (112) to satisfy the processor count;
- allocate (210) data containers (128, 130, 132, 134) equal to the number of the data containers in the container management system memory;
- transfer (212) the multiple data base requests to the data containers as they are received, wherein each of the multiple data base requests is assigned to a chosen data container selected from the data containers using the metadata;
- transfer (214) a filled data container selected from the number of data containers to the processor hosting service via the second network connection, wherein the filled data container is filled with the multiple data base requests above a predetermined threshold.

2. The database management system of claim 1, wherein the data base management system further comprises the processor hosting service, wherein the processor hosting service comprises multiple processor groups (310, 310', 310", 310"'), wherein each of the multiple processor groups comprises multiple processors and a shared memory, wherein the processor hosting service is configured for allocating a portion of the multiple processor groups to the container management system to provide the processor pool.

3. The database management system of claim 2, wherein the container memory model is configured for formatting the multiple data base requests into a page of memory for the shared memory for use by the request processor engine, wherein transferring the multiple data base requests to the data containers as they are received comprises formatting the multiple data base requests into the page of memory using the container memory model.

4. The database management system of any one of claims 2 through 3, wherein the multiple processors are configured for generating database transaction requests using the multiple database requests, wherein the multiple processors route the database transaction requests to two or more databases (312, 312', 312", 312'") using a third network connection (314).

5. The database management system of claim 4, wherein the multiple processors are configured for receiving a confirmation or a failure each of the database transaction requests via the third network connection.

6. The database management system of claim 5, wherein the multiple processors are configured for writing the confirmation or the failure each of the database transaction requests periodically in a block chain log (438).

7. The database management system of claim 6, wherein the database management system further comprises an interface system (300) for connecting to multiple clients (302, 302', 302", 302'"), wherein the interface system is configured for receiving application requests from the multiple clients via a fourth network connection (304), wherein the interface system is configured for transforming the application requests into the multiple database requests and the metadata, wherein the interface system comprises a completion log for locking each of the application requests, wherein the interface system is configured for repeatedly searching the block chain log for a confirmation or a failure of each of the application requests, wherein the interface system is configured for reporting the confirmation or the failure to the multiple clients upon finding the confirmation or the failure within the block chain log.

8. A computer program product comprising machine executable instructions (114) for execution by a container management processor (104) controlling a container management system (102) of a database management system (100, 400), wherein execution of the machine executable instructions cause the container management processor to repeatedly:
- receive (200) multiple database requests (116) via a first network connection (110), wherein each of the multiple database requests comprises metadata descriptive of the multiple database requests;
- calculate (202) a receiving rate (118) by counting the multiple database requests received in a predetermined duration;
- calculate a (204) processor count (120) using a predictive model and the receiving rate;
- determine (206) a number of data containers (122) using the rate of requests and a container memory model, wherein each of the data containers is a block of the container management system memory assigned by continuous address space;
- request (208) a processor pool from a processor hosting service (306) via a second network connection (112) to satisfy the processor count;
- allocate (210) data containers (128, 130, 132, 134) equal to the number of the data containers in the container management system memory;
- transfer (212) the multiple data base requests to the data containers as they are received, wherein each of the multiple data base requests is assigned to a chosen data container selected from the data containers using the metadata;
- transfer (214) a filled data container selected from the number of data containers to the processor hosting service via the second network connection, wherein the filled data container is filled with the multiple data base requests above a predetermined threshold.

9. A method of operating a database management system (100) comprising a container management system (102), wherein the method comprises repeatedly:
- receiving (200) multiple database requests (116) via a first network connection (110), wherein each of the multiple database requests comprises metadata descriptive of the multiple database requests;
- calculating (202) a receiving rate (118) by counting the multiple database requests received in a predetermined duration;
- calculating (204) a processor count (120) using a predictive model and the receiving rate;
- determining (206) a number of data containers (122) using the rate of requests and a container memory model, wherein each of the data containers is a block of the container management system memory assigned by continuous address space;
- requesting (208) a processor pool from a processor hosting service (306) via a second network connection (112) to satisfy the processor count;
- allocating (210) data containers (128, 130, 132, 134) equal to the number of the data containers in the container management system memory;
- transferring (212) the multiple data base requests to the data containers as they are received, wherein each of the multiple data base requests is assigned to a chosen data container selected from the data containers using the metadata;
- transferring (214) a filled data container selected from the number of data containers to the processor hosting service via the second network connection, wherein the filled data container is filled with the multiple data base requests above a predetermined threshold.

## Patentansprüche

1. Datenbankmanagementsystem (100, 400), das ein Containermanagementsystem (102) aufweist, wobei das Containermanagementsystem Folgendes aufweist:
- einen Containermanagementsystemspeicher (106) zum Speichern von maschinenausführbaren Anweisungen (114);
- einen Containermanagementsystemprozessor (104), wobei die Ausführung der maschinenausführbaren Anweisungen den Containermanagementsystemprozessor veranlasst zum wiederholten:
- Empfangen (200) mehrerer Datenbankanforderungen (116) über eine erste Netzwerkverbindung (110), wobei jede der mehreren Datenbankanforderungen Metadaten aufweist, die die mehreren Datenbankanforderungen beschreiben;
- Berechnen (202) einer Empfangsrate (118) durch Zählen der in einer vorbestimmten Dauer empfangenen mehreren Datenbankanforderungen;
- Berechnen (204) einer Prozessorzahl (120) unter Verwendung eines Vorhersagemodells und der Empfangsrate;
- Ermitteln (206) einer Anzahl von Datencontainern (122) unter Verwendung der Empfangsrate und eines Containerspeichermodells, wobei jeder der Datencontainer ein Block des Containermanagementsystemspeichers ist, der nach kontinuierlichem Adressraum zugeteilt wird;
- Anfordern (208) einer Prozessorbasis von einem Prozessor-Hosting-Dienst (306) über eine zweite Netzwerkverbindung (112), um die Prozessorzahl zu erfüllen;
- Allozieren (210) von Datencontainern (128, 130, 132, 134) gleich der Anzahl der Datenbehälter im Containermanagementsystemspeicher;
- Übertragen (212) der mehreren Datenbankanforderungen zu den Datencontainern bei ihrem Empfangen, wobei jede der mehreren Datenbankanforderungen einem aus den Datencontainern ausgewählten gewählten Datencontainer unter Verwendung der Metadaten zugewiesen wird;
- Übertragen (214) eines aus der Anzahl von Datencontainern ausgewählten gefüllten Datencontainers zum Prozessor-Hosting-Dienst über die zweite Netzwerkverbindung, wobei der gefüllte Datencontainer mit den mehreren Datenbankanforderungen über einer vorbestimmten Schwelle gefüllt wird.

2. Datenbankmanagementsystem nach Anspruch 1, wobei das Datenbankmanagementsystem ferner den Prozessor-Hosting-Dienst aufweist, wobei der Prozessor-Hosting-Dienst mehrere Prozessorgruppen (310, 310', 310", 310'") aufweist, wobei jede der mehreren Prozessorgruppen mehrere Prozessoren und einen gemeinsam genutzten Speicher aufweist, wobei der Prozessor-Hosting-Dienst zum Allozieren eines Teils der mehreren Prozessorgruppen zu dem Containermanagementsystem zum Bereitstellen der Prozessorbasis konfiguriert ist.

3. Datenbankmanagementsystem nach Anspruch 2, wobei das Containerspeichermodell zum Formatieren der mehreren Datenbankanforderungen zu einer Speicherseite für den gemeinsam genutzten Speicher zur Verwendung durch die Anforderungsprozessor-Funktionseinheit konfiguriert ist, wobei das Übertragen der mehreren Datenbankanforderungen zu den Datencontainer bei ihrem Empfangen das Formatieren der mehreren Datenbankanforderungen zu den Datencontainern bei ihrem Empfangen das Formatieren der mehreren Datenbankanforderungen zu der Speicherseite unter Verwendung des Containerspeichermodells aufweist.

4. Datenbankmanagementsystem nach einem der Ansprüche 2 bis 3, wobei die mehreren Prozessoren zum Generieren von Datenbanktransaktionsanforderungen unter Verwendung der mehreren Datenbankanforderungen konfiguriert sind, wobei die mehreren Prozessoren die Datenbanktransaktionsanforderungen unter Verwendung einer dritten Netzwerkverbindung (314) zu zwei oder mehr Datenbanken (312, 312', 312", 312'") leiten.

5. Datenbankmanagementsystem nach Anspruch 4, wobei die mehreren Prozessoren zum Empfangen jeweils einer Bestätigung oder eines Scheiterns der Datenbanktransaktionsanforderungen über die dritte Netzwerkverbindung konfiguriert sind.

6. Datenbankmanagementsystem nach Anspruch 5, wobei die mehreren Prozessoren zum periodischen Schreiben jeweils der Bestätigung oder des Scheiterns der Datenbanktransaktionsanforderungen in ein Blockchain-Protokoll (438) konfiguriert sind.

7. Datenbankmanagementsystem nach Anspruch 6, wobei das Datenbankmanagementsystem ferner ein Schnittstellensystem (300) zum Verbinden mit mehreren Clients (302, 302', 302", 302'") aufweist, wobei das Schnittstellensystem zum Empfangen von Anwendungsanforderungen von den mehreren Clients über eine vierte Netzwerkverbindung (304) konfiguriert ist, wobei das Schnittstellensystem zum Umwandeln der Anwendungsanforderungen in die mehrere Datenbankanforderungen und die Metadaten konfiguriert ist, wobei das Schnittstellensystem ein Abschlussprotokoll zum Blockieren jeder der Anwendungsanforderungen aufweist, wobei das Schnittstellensystem zum wiederholten Durchsuchen des Blockchain-Protokolls nach einer Bestätigung oder einem Scheitern von jeder der Anwendungsanforderungen konfiguriert ist, wobei das Schnittstellensystem konfiguriert ist, um den mehreren Clients bei Finden der Bestätigung oder des Scheiterns im Blockchain-Protokoll Bericht über die Bestätigung oder das Scheitern zu erstatten.

8. Computerprogrammprodukt, das maschinenausführbare Anweisungen (114) zur Ausführung durch einen Containermanagementprozessor (104) aufweist, der ein Containermanagementsystem (102) eines Datenbankmanagementsystems (100, 400) steuert, wobei die Ausführung der maschinenausführbaren Anweisungen den Containermanagementprozessor veranlasst zum wiederholten:
- Empfangen (200) mehrerer Datenbankanforderungen (116) über eine erste Netzwerkverbindung (110), wobei jede der mehreren Datenbankanforderungen Metadaten aufweist, die die mehreren Datenbankanforderungen beschreiben;
- Berechnen (202) einer Empfangsrate (118) durch Zählen der in einer vorbestimmten Dauer empfangenen mehreren Datenbankanforderungen;
- Berechnen (204) einer Prozessorzahl (120) unter Verwendung eines Vorhersagemodells und der Empfangsrate;
- Ermitteln (206) einer Anzahl von Datencontainern (122) unter Verwendung der Rate von Anforderungen und eines Containerspeichermodells, wobei jeder der Datencontainer ein Block des Containermanagementsystemspeichers ist, der nach kontinuierlichem Adressraum zugeteilt wird;
- Anfordern (208) einer Prozessorbasis von einem Prozessor-Hosting-Dienst (306) über eine zweite Netzwerkverbindung (112), um die Prozessorzahl zu erfüllen;
- Allozieren (210) von Datencontainern (128, 130, 132, 134) gleich der Anzahl der Datenbehälter im Containermanagementsystemspeicher;
- Übertragen (212) der mehreren Datenbankanforderungen zu den Datencontainern bei ihrem Empfangen, wobei jede der mehreren Datenbankanforderungen einem aus den Datencontainern ausgewählten gewählten Datencontainer unter Verwendung der Metadaten zugewiesen wird;
- Übertragen (214) eines aus der Anzahl von Datencontainern ausgewählten gefüllten Datencontainers zum Prozessor-Hosting-Dienst über die zweite Netzwerkverbindung, wobei der gefüllte Datencontainer mit den mehreren Datenbankanforderungen über einer vorbestimmten Schwelle gefüllt wird.

9. Betriebsverfahren für ein Datenbankmanagementsystem (100), das ein Containermanagementsystem (102) aufweist, wobei das Verfahren wiederholt Folgendes aufweist:
- Empfangen (200) mehrerer Datenbankanforderungen (116) über eine erste Netzwerkverbindung (110), wobei jede der mehreren Datenbankanforderungen Metadaten aufweist, die die mehreren Datenbankanforderungen beschreiben;
- Berechnen (202) einer Empfangsrate (118) durch Zählen der in einer vorbestimmten Dauer empfangenen mehreren Datenbankanforderungen;
- Berechnen (204) einer Prozessorzahl (120) unter Verwendung eines Vorhersagemodells und der Empfangsrate;
- Ermitteln (206) einer Anzahl von Datencontainern (122) unter Verwendung der Rate von Anforderungen und eines Containerspeichermodells, wobei jeder der Datencontainer ein Block des Containermanagementsystemspeichers ist, der nach kontinuierlichen Adressraum zugeteilt wird;
- Anfordern (208) einer Prozessorbasis von einem Prozessor-Hosting-Dienst (306) über eine zweite Netzwerkverbindung (112), um die Prozessorzahl zu erfüllen;
- Allozieren (210) von Datencontainern (128, 130, 132, 134) gleich der Anzahl der Datenbehälter im Containermanagementsystemspeicher;
- Übertragen (212) der mehreren Datenbankanforderungen zu den Datencontainern bei ihrem Empfangen, wobei jede der mehreren Datenbankanforderungen einem aus den Datencontainern ausgewählten gewählten Datencontainer unter Verwendung der Metadaten zugewiesen wird;
- Übertragen (214) eines aus der Anzahl von Datencontainern ausgewählten gefüllten Datencontainers zum Prozessor-Hosting-Dienst über die zweite Netzwerkverbindung, wobei der gefüllte Datencontainer mit den mehreren Datenbankanforderungen über einer vorbestimmten Schwelle gefüllt wird.

## Revendications

1. Système de gestion de base de données (100, 400) comprenant un système de gestion de conteneurs (102), où le système de gestion de conteneurs comprend :
- une mémoire (106) de système de gestion de conteneurs pour stocker des instructions exécutables par machine (114) ;
- un processeur (104) de système de gestion de conteneurs, où l'exécution des instructions exécutables par machine fait en sorte que le processeur du système de gestion de conteneurs, de manière répétée :
- reçoit (200) des multiples demandes de base de donnés (116) par le biais d'une première connexion de réseau (110), où chacune des multiples demandes de base de données comprend des métadonnées descriptrices des multiples demandes de base de données ;
- calcule (202) un taux de réception (118) en comptant les multiples demandes de base de données reçues pendant une durée prédéterminée ;
- calcule (204) un comptage de processeur (120) en utilisant un modèle de prédiction et le taux de réception ;
- détermine (206) un nombre de conteneurs de données (122) en utilisant le taux de réception et un modèle de mémoire de conteneur, où chacun des conteneurs de données est un bloc de la mémoire du système de gestion de conteneurs associé par un espace d'adresse continu ;
- demande (208) à un pool de processeurs provenant d'un service hôte de processeurs (306) de satisfaire le comptage du processeur par le biais d'une deuxième connexion de réseau (112) ;
- alloue (210) des conteneurs de données (128, 130, 132, 134) égaux au nombre de conteneurs de données dans la mémoire du système de gestion de conteneurs ;
- transfère (212) les multiples demandes de base de données aux conteneurs de données au fur et à mesure qu'elles sont reçues, où chacune des multiples demandes de base de données est associée à un conteneur de données sélectionné choisi parmi les conteneurs de données en utilisant les métadonnées ;
- transfère (214) un conteneur de données rempli choisi parmi le nombre de conteneurs de données au service hôte de processeurs par le biais de la deuxième connexion de réseau, où le conteneur de données rempli est rempli avec les multiples demandes de base de données au-delà d'un seuil prédéterminé.

2. Système de gestion de base de données selon la revendication 1, dans lequel le système de gestion de base de données comprend en outre le service hôte de processeurs, où le service hôte de processeurs comprend de multiples groupes de processeurs (310, 310', 310", 310'"), où chacun des multiples groupes de processeurs comprend des processeurs multiples et une mémoire partagée, où le service hôte de processeurs est configuré pour allouer une partir des multiples groupes de processeurs au système de gestion de conteneurs pour fournir le pool de processeurs.

3. Système de gestion de base de données selon la revendication 2, dans lequel le modèle de mémoire de conteneur est configuré pour formater les multiples demandes de base de données en une page de mémoire pour la mémoire partagée en vue d'une utilisation par le moteur de processeur de la demande, où le transfert des multiples demandes de base de données vers les conteneurs de données lorsqu'elles sont reçues comprend un formatage des multiples demandes de base de données en une page de mémoire en utilisant le modèle de mémoire de conteneur.

4. Système de gestion de base de données selon l'une quelconque des revendications 2 à 3, dans lequel les multiples processeurs sont configurés pour la génération de demandes de transactions de base de données en utilisant les multiples demandes de base de données, où les multiples processeurs acheminent les demandes de transactions de base de données vers deux ou plusieurs bases de données (312, 312', 312", 312'") en utilisant une troisième connexion de réseau (314).

5. Système de gestion de base de données selon la revendication 4, dans lequel les multiples processeurs sont configurés pour recevoir une confirmation ou un échec de chacune des demandes de transactions de base de données par le biais de la troisième connexion de réseau.

6. Système de gestion de base de données selon la revendication 5, dans lequel les multiples processeurs sont configurés pour écrire la confirmation ou l'échec de chacune des demandes de transaction de base de données de manière périodique dans un registre de chaînes de blocs (438).

7. Système de gestion de base de données selon la revendication 6, dans lequel le système de gestion de base de données comprend un système d'interface (300) pour se connecter à de multiples clients (302, 302', 302", 302'"), où le système d'interface est configuré pour recevoir des demandes d'applications provenant des multiples clients par le biais d'une quatrième connexion de réseau (304), où le système d'interface est configuré pour transformer les demandes d'applications en les multiples demandes de base de données et métadonnées, où le système d'interface comprend un registre de fin d'exécution pour verrouiller chacune des demandes d'application, où le système d'interface est configuré pour rechercher de manière répétée le registre de chaîne de blocs pour une confirmation ou un échec de chacune des demandes d'application, où le système d'interface est configuré pour signaler la confirmation ou l'échec aux multiples clients lorsqu'il trouve la confirmation ou l'échec dans le registre de la chaine de blocs.

8. Produit-programme informatique comprenant des instructions (114) exécutables par machine pour l'exécution, par un processeur de gestion de conteneurs (104) commandant un système de gestion de conteneurs (102) d'un système de gestion de base de données (100, 400), où l'exécution des instructions exécutables par machine fait en sorte que le processeur de gestion de conteneurs, de manière répétée :
- reçoit (200) des multiples demandes de base de donnés (116) par le biais d'une première connexion de réseau (110), où chacune des multiples demandes de base de données comprend des métadonnées descriptrices des multiples demandes de base de données ;
- calcule (202) un taux de réception (118) en comptant les multiples demandes de base de données reçues pendant une durée prédéterminée ;
- calcule (204) un comptage de processeur (120) en utilisant un modèle de prédiction et le taux de réception ;
- détermine (206) un nombre de conteneurs de données (122) en utilisant le taux de réception et un modèle de mémoire de conteneur, où chacun des conteneurs de données est un bloc de la mémoire du système de gestion de conteneur associé par un espace d'adresse continu ;
- demande (208) à un pool de processeurs provenant d'un service hôte de processeurs (306) de satisfaire le comptage du processeur par le biais d'une deuxième connexion de réseau (112) ;
- alloue (210) des conteneurs de données (128, 130, 132, 134) égaux au nombre de conteneurs de données dans la mémoire de système de gestion de conteneurs ;
- transfère (212) les multiples demandes de base de données aux conteneurs de données au fur et à mesure qu'elles sont reçues, où chacune des multiples demandes de base de données est associée à un conteneur de données sélectionné choisi parmi les conteneurs de données en utilisant les métadonnées ;
- transfère (214) un conteneur de données rempli choisi parmi le nombre de conteneurs de données au service hôte de processeurs par le biais de la deuxième connexion de réseau, où le conteneur de données rempli est rempli avec les multiples demandes de base de données au-delà d'un seuil prédéterminé.

9. Procédé de mise en œuvre d'un système de gestion de base de données (100) comprenant un système de gestion de conteneurs (102), où le procédé comprend de manière répétée :
- la réception (200) de multiples demandes de base de donnés (116) par le biais d'une première connexion de réseau (110), où chacune des multiples demandes de base de données comprend des métadonnées descriptrices des multiples demandes de base de données ;
- le calcul (202) d'un taux de réception (118) en comptant les multiples demandes de base de données reçues pendant une durée prédéterminée ;
- le calcul (204) d'un comptage de processeur (120) en utilisant un modèle de prédiction et le taux de réception ;
- la détermination (206) d'un nombre de conteneurs de données (122) en utilisant le taux de réception et un modèle de mémoire de conteneur, où chacun des conteneurs de données est un bloc de la mémoire de système de gestion de conteneur associé par un espace d'adresse continu ;
- la demande (208) à un pool de processeurs provenant d'un service hôte de processeurs (306) de satisfaire le comptage du processeur par le biais d'une deuxième connexion de réseau (112) ;
- l'allocation (210) des conteneurs de données (128, 130, 132, 134) égaux au nombre de conteneurs de données dans la mémoire de système de gestion de conteneurs ;
- le transfert (212) des multiples demandes de base de données aux conteneurs de données au fur et à mesure qu'elles sont reçues, où chacune des multiples demandes de base de données est associée à un conteneur de données sélectionné choisi parmi les conteneurs de données en utilisant les métadonnées ;
- le transfert (214) d'un conteneur de données rempli choisi parmi le nombre de conteneurs de données au service hôte de processeurs par le biais de la deuxième connexion de réseau, où le conteneur de données rempli est rempli avec les multiples demandes de base de données au-delà d'un seuil prédéterminé.
